# EUROPÄISCHE PATENTANMELDUNG

(11) **EP 1 378 679 A2**
(43) Veröffentlichungstag der Anmeldung: **07.01.2004**
(21) Anmeldenummer: 03013691.5
(22) Anmeldetag: 17.06.2003
(51) Int. Cl.: F16D 48/02, F16D 25/0638

(54) **Hydraulisch betätigbares Kupplungssystem**

(30) Priorität: 06.07.2002 DE 10230501
(71) Anmelder: ZF Sachs AG, 97424 Schweinfurt (DE)
(72) Erfinder: Busold, Thomas, Dipl.-Ing., 36039 Fulda (DE); Moseler, Olaf, Dr.-Ing., 97070 Würzburg (DE); Kuhstrebe, Jochen, Dipl.-Phys., 97318 Westheim (DE); Reisser, Wolfgang, Dipl.-Ing.(FH), 97526 Sennfeld (DE)

(57) **Zusammenfassung**

Ein Kupplungssystem, umfassend eine Kupplungseinrichtung (202) für die Anordnung in einem Kraftfahrzeug-Antriebsstrang zur Momentenübertragung zwischen einer Antriebseinheit und einem Getriebe des Antriebsstrangs, wobei die Kupplungseinrichtung wenigstens eine Kupplungsanordnung (204, 206) mit einer einer Abtriebswelle der Antriebseinheit zugeordneten Eingangsseite und einer einer Getriebeeingangswelle zugeordneten Ausgangsseite aufweist und vermittels wenigstens eines in die Kupplungseinrichtung (202) integrierten, sich im Betrieb mitdrehenden hydraulischen Nehmerzylinders (118 bzw. 140) betätigbar ist, wobei das Kupplungssystem eine stationär angeordnete Steuer-/Regel-Ventilanordnung (214, 216) umfasst, die einerseits an einer hydraulischen Druckmediumquelle (254) und andererseits über eine Drehdurchführungsanordnung (260) an dem hydraulischen Nehmerzylinder angeschlossen oder anschließbar ist, ist nach einem Erfindungsaspekt gekennzeichnet durch ein Druckmediumreservoir (252), welches zumindest mit einem Nutz-Druckmediumaufnahmebereich oberhalb eines durch die Drehdurchführungsanordnung (260) definierten Höhenbereichs angeordnet ist und aus dem einem die Drehdurchführungsanordnung umfassenden, die Steuer-/Regel-Ventilanordnung mit dem hydraulischen Nehmerzylinder verbindenden Hydrauliksystemabschnitt Druckmedium zuführbar ist, derart, dass i) Druckmedium an wenigstens einer Leckagestelle (290, 296) auf der Abflussseite ansteht, um einem Abfluss von Druckmedium aus dem Hydrauliksystemabschnitt entgegenzuwirken oder/und ii) Druckmedium über wenigstens eine Zuflussstelle (290, 296) in den Hydrauliksystemabschnitt nachfließt, um einen Abfluss von Druckmedium aus dem Hydrauliksystemabschnitt auszugleichen.

## Beschreibung

Die Erfindung betrifft allgemein ein Kupplungssystem, umfassend eine Kupplungseinrichtung für die Anordnung in einem Kraftfahrzeug-Antriebsstrang zur Momentenübertragung zwischen einer Antriebseinheit und einem Getriebe des Antriebsstrangs, wobei die Kupplungseinrichtung wenigstens eine Kupplungsanordnung mit einer einer Abtriebswelle der Antriebseinheit zugeordneten Eingangsseite und einer einer Getriebeeingangswelle zugeordneten Ausgangsseite aufweist und vermittels wenigstens eines in die Kupplungseinrichtung integrierten, sich im Betrieb mitdrehenden hydraulischen Nehmerzylinders betätigbar ist, wobei das Kupplungssystem eine stationär angeordnete Steuer-/Regel-Ventilanordnung umfasst, die einerseits an einer hydraulischen Druckmediumquelle und andererseits über eine Drehdurchführungsanordnung an dem hydraulischen Nehmerzylinder angeschlossen oder anschließbar ist.

Derartige Kupplungssysteme und entsprechende Kupplungseinrichtungen sind in verschiedensten Ausgestaltungen bekannt, sowohl als so genannte "Einfach-Kupplungen" mit genau einer einer Getriebeeingangswelle zugeordneten Kupplungsanordnung als auch als so genannte "Doppel-Kupplungen" mit zwei jeweils einer Getriebeeingangswelle zugeordneten Kupplungsanordnungen. Es wird beispielsweise auf die DE 100 04 179 A1 verwiesen, die eine Doppel- oder Mehrfach-Kupplungseinrichtung der nasslaufenden Lamellenkupplungsbauart in verschiedenen Ausführungsvarianten zeigt. Betreffend eine Doppelkupplung der Reibscheibenbauart kann beispielsweise auf die DE 35 26 630 A1 verwiesen werden.

Liegt bei einer im Betrieb rotierenden Hydraulikdruckkammer, welche über eine Drehdurchführung mit Drucköl versorgt wird, längere Zeit kein Drucköl an, etwa weil die Kupplungseinrichtung bzw. das Kraftfahrzeug nicht im Betrieb ist, kann das in der Druckkammer befindliche Drucköl über die mehr oder weniger Leckage behaftete Drehdurchführung bzw. Drehdichtungen aus der Druckkammer abfließen. Bei Wiederinbetriebnahme, etwa nach einem Start des betreffenden Kraftfahrzeugs, muss dann die Druckkammer erst wieder mit Drucköl gefüllt und die Druckkammer möglichst vollständig entlüftet werden. Dies ist insbesondere deswegen erforderlich, da in der Druckkammer bzw. im Hydrauliksystem verbleibende Luft im Gegensatz zu einem hydraulischen Druckmedium kompressibel ist und deswegen das Steuer-/Regel-Verhalten des den hydraulischen Nehmerzylinder aufweisenden Hydrauliksystems in undefinierter Weise verfälschen würde.

Rotierende Druckkammern der angesprochenen Art werden nicht nur in Kupplungseinrichtungen, etwa die angesprochenen nasslaufenden Doppelkupplungen, sondern auch beispielsweise in Automatgetrieben in einer hydraulisch betätigbaren Kupplung oder Bremse zum Schalten der Getriebegänge verwendet.

Herkömmlich glaubte man teilweise, ohne spezielle Entlüftungsanordnungen bzw. Entlüftungsfunktionalitäten und ohne andere, ein Abfließen von Drucköl verhindernde oder begrenzende Maßnahmen auszukommen. Bei der erstmaligen Befüllung eines rotierenden Druckraums füllt sich der Druckraum fliehkraftbedingt von radial außen nach radial innen, so dass die im Druckraum (noch) enthaltene Luft im radial inneren Bereich des Druckraums, also an den radial innen gelegenen Wandungen der rotierenden Kammer, angeordnet ist. Dies resultiert daraus, dass das Druckmedium, in der Regel Öl, eine höhere Dichte als die Luft aufweist. Durch Zufuhr des hydraulischen Druckmediums in die rotierende Druckkammer kann somit die sich darin befindliche Luft nach radial innen aus der Kammer heraus verdrängt werden.

In der DE 199 33 470 A1 wird vorgeschlagen, einen rotierenden Druckraum mit einem Luftabscheidekanal zu versehen, dessen Einlassöffnung am Innendurchmesser des rotierenden Druckraums oder am Innendurchmesser des rotierenden Teils der Zuführung angeordnet ist und dessen Auslassöffnung in einen Entlüftungsraum mündet. Durch diese Ausbildung wird eine Spülung des rotierenden Druckraums ermöglicht, um eine darin enthaltene Öl-Luft-Dispersion, die einen hohen Luftanteil enthält, gezielt aus dem Druckraum abzuführen. Die Spülung bzw. Luftabscheidung kann dabei kontinuierlich, beispielsweise mittels Blenden, Nuten, Bohrungen, etc., oder gesteuert, beispielsweise mittels eines ansteuerbaren elektromagnetischen Ventils, eines drehzahlgesteuerten Ventils oder eines druckgesteuerten Ventils, durchgeführt werden.

In der DE 199 42 555 A1 wird betreffend ein hydraulisch betätigbares, rotierendes Schaltelement eines Automatgetriebes vorgeschlagen, in einem deaktivierten Zustand des Schaltelements den Betätigungskolben periodisch mit Druckmittelimpulsen zu beaufschlagen, um Leckageverluste auszugleichen und den Kolben in einer definierten Stellung zu halten, bzw. diesen in eine definierte Stellung zu bringen.

Die sich auf eine hydraulisch betätigbare Kupplung insbesondere eines Kraftfahrzeug-Automatgetriebes beziehende DE 100 15 779 A1 schlägt für den hydraulischen Nehmerzylinder vor, in einer Wandung des Zylindergehäuses einen Verbindungskanal derart anzuordnen, dass dessen eines Ende im Druckraum mündet und dessen anderes Ende im nichtgeschalteten Zustand der betreffenden Kupplung bzw. Bremse in einem jenseits des Kolbens angeordneten Kupplungsraum mündet und im geschalteten Zustand der Kupplung bzw. Bremse ebenfalls im Druckraum mündet.

Die DE 100 17 271 A1 offenbart im Zusammenhang mit einem Automatgetriebe für Kraftfahrzeuge eine Anordnung zur Verringerung des Luftanteils in einer Öl-Luft-Dispersion.

Zumindest bei einigen der bekannten Lösung ist eine komplette und gesteuerte Entlüftung der rotierenden Druckkammer nicht gewährleistet. Die Luft wird zwar aus der Druckkammer weitestgehend herausgedrängt, kann sich jedoch weiterhin in den Zuleitungen zu den Druckkammern befinden. Existieren komprimierbare Luftblasen in den Zuleitungen, ist das Steuer-/Regel-Verhalten des betreffenden hydraulischen Nehmerzylinders verfälscht, da den vorgesehenen Steuer-/Regel-Parametern ein inkompressibles Druckmedium zugrunde liegt.

Vor diesem Hintergrund wäre es wünschenswert, wenn von vornherein der Eintritt von Luft bzw. das Auslaufen des hydraulischen Mediums (insbesondere Hydrauliköls) aus dem Hydrauliksystem durch entsprechende bauliche Maßnahmen verhindert oder doch zumindest stark reduziert werden könnte. Vom Konstrukteur sind hierbei aber auch gewisse herstellungstechnische und insbesondere montagetechnische Randbedingungen zu beachten. So kann bei bisherigen Nasslauf-Doppelkupplungen gemäß Konstruktionen der Anmelderin das Hydrauliköl nach dem Abstellen des Fahrzeugs über die Drehdurchführungsdichtungen aus dem Hydrauliksystem auslaufen, und es sammelt sich Luft in den Kupplungsdruckräumen (hydraulischen Nehmerzylindern) an. Diese Luft führt, wie schon angesprochen, bei einem Starten des Fahrzeugs dazu, dass beim Anfahren die Steuerung/-Regelung aufgrund der Luft bzw. der Luftblasen im Hydrauliksystem das Soll-Drehmoment nicht Zielgenau einregeln/einsteuern kann. Die Leckage an den Drehdurchführungsdichtungen ist bei den bisherigen Konstruktionen deswegen vergleichsweise groß, weil eine mit geschlitzten Dichtungsringen auf Teflonbasis ausgeführte Drehdurchführung verwendet wird. Die Drehdurchführung wird von einer zu den Getriebeeingangswellen konzentrischen Bohrung im Getriebe und einem hierein eingesteckten Ringteil oder Nabenteil gebildet, und die geschlitzten Ringe stehen einerseits mit dem Innenumfang der Bohrung und andererseits mit dem Außenumfang des Ringteils bzw. Nabenteils in Dichtungseingriff. Die hydraulischen Nehmerzylinder sind an ihrer zugeordneten Steuer-/Regel-Ventilanordnung über Ölkanäle oder Ölleitungen angeschlossen, die axial verlaufende Ölkanalabschnitte im Ringteil bzw. Nabenteil und hieran sich anschließende radial verlaufende Ölkanalabschnitte im Getriebegehäuse, die am Innenumfang der Bohrung münden, aufweisen. Die geschlitzten Ringe auf Teflonbasis sorgen im Normalbetrieb für eine hinreichende Abdichtung des Drucköls nach außen und zum jeweils anderen hydraulischen Nehmerzylinder hin, weisen aber eine derartige Leckage auf, dass es nach Abstellen des Fahrzeugs zu einem nennenswerten Austreten von Öl kommt, mit den angesprochenen Folgen. Die Verwendung geschlitzter Ringe auf Teflonbasis beruht auf anforderungs-, montage- und werkstoffbedingten Randbedingungen. So würden etwa ungeschlitzte Ringe auf Teflonbasis bei einem Aufziehen auf das Ringteil bzw. Nabenteil bleibende Verformungen behalten, die ein Einschieben des Ringteils in die Getriebebohrung unmöglich machen würden.

Aufgabe der Erfindung ist es, für das eingangs angesprochene Kupplungssystem verschiedene bauliche Maßnahmen anzugeben, die alleine und - vorzugsweise - in Kombination das Austreten von Hydraulikmedium aus dem Hydrauliksystem verhindern oder zumindest doch deutlich reduzieren, so dass die oben angesprochenen Probleme nicht oder zumindest nur noch deutlich gemildert auftreten.

Nach einem ersten Aspekt wird für das eingangs angesprochene Kupplungssystem erfindungsgemäß vorgeschlagen, dass dieses ein Druckmediumreservoir aufweist, welches insgesamt oder zumindest mit einem Nutz-Drehmediumaufnahmebereich oberhalb eines durch die Drehdurchführungsanordnung definierten Höhenbereichs angeordnet ist und aus dem einem die Drehdurchführungsanordnung umfassenden, die Steuer-/Regel-Ventilanordnung mit dem hydraulischen Nehmerzylinder verbindenden Hydrauliksystemabschnitt Druckmedium zuführbar ist, derart, dass i) Druckmedium an wenigstens einer Leckagestelle auf der Abflussseite ansteht, um einem Abfluss von Druckmedium aus dem Hydrauliksystemabschnitt entgegenzuwirken oder/und ii) Druckmedium über wenigstens eine Zuflussstelle in den Hydrauliksystemabschnitt nachfließt, um einen Äbfluss von Druckmedium aus dem Hydrauliksystemabschnitt auszugleichen.

Vermittels des oberhalb des angegebenen Höhenbereichs angeordneten Druckmediumreservoirs kann unabhängig vom Betriebszustand des Kupplungssystems bzw. des Kraftfahrzeugs, so auch bei abgestelltem Kraftfährzeug, Druckmedium an wenigstens einer Leckagestelle abflussseitig anstehen bzw. über wenigstens eine Zuflussstelle in den Hydrauliksystemabschnitt nachfließen, um einen Abfluss von Druckmedium aus dem Hydrauliksystemabschnitt entgegenzuwirken bzw. diesen auszugleichen. Der Zufluss bzw. das Anstehen des Hydraulikmediums erfolgt vorzugsweise einfach unter der Einwirkung der Schwerkraft. Eine spezielle Fördereinrichtung, beispielsweise Pumpe, ist nicht erforderlich. Steht auf der Abflussseite einer Leckagestelle Druckmedium an, so kann, in Abhängigkeit vom Druck des anstehenden Druckmediums, an der Leckagestelle das Druckmedium nicht bzw. nur noch in entsprechend geringerem Maße aus dem Hydrauliksystemabschnitt abfließen. Soweit ein Abfluss von Druckmedium aus dem Hydrauliksystemabschnitt etwa an wenigstens einer Leckagestelle auftritt, kann erfindungsgemäß das über die wenigstens eine Zugriffsstelle nachfließende Medium diesen Abfluss ausgleichen.

In der Regel wird bei dem eingangs angesprochenen Kupplungssystem vorgesehen sein, dass über die Steuer-/Regel-Ventilanordnung einem die Drehdurchführungsanordnung umfassenden, die Steuer-/Regel-Ventilanordnung mit dem hydraulischen Nehmerzylinder verbindenden Hydrauliksystemabschnitt Druckmedium von der Druckmediumquelle zuführbar und Druckmedium aus dem Hydrauliksystemabschnitt in Richtung zu einer an der Steuer-/Regel-Ventilanordnung angeschlossenen Druckmediumaufnahme abführbar ist. Weiterbildend wird hierzu vorgeschlagen, dass eine die Steuer-/Regel-Ventilanordnung umfassende Druckmediumverbindung zwischen der Drehdurchführungsanordnung und der Druckmediumaufnahme wenigstens einen Abschnitt aufweist, der oberhalb eines durch die Drehdurchführungsanordnung definierten Höhenbereichs angeordnet ist, oder/und dass die Steuer-/Regel-Ventilanordnung in einem unbetätigten Ruhezustand in Richtung zur Druckmediumaufnahme im Wesentlichen abgeschlossen ist. Dieser Weiterbildungsvorschlag ist auch unabhängig von dem Erfindungsvorschlag gemäß dem ersten Aspekt von Interesse. Dementsprechend wird nach einem zweiten Aspekt der Erfindung ein Kupplungssystem bereitgestellt, umfassend eine Kupplungseinrichtung für die Anordnung in einem Kraftfahrzeug-Antriebsstrang zur Momentenübertragung zwischen einer Antriebseinheit und einem Getriebe des Antriebsstrangs, wobei die Kupplungseinrichtung wenigstens eine Kupplungsanordnung mit einer einer Abtriebswelle der Antriebseinheit zugeordneten Eingangsseite und einer einer Getriebeeingangswelle zugeordneten Ausgangsseite aufweist und vermittels wenigstens eines in die Kupplungseinrichtung integrierten, sich im Betrieb mitdrehenden hydraulischen Nehmerzylinders betätigbar ist, wobei das Kupplungssystem eine stationär angeordnete Steuer-/Regel-Ventilanordnung umfasst, die einerseits an einer hydraulischen Druckmediumquelle und andererseits über eine Drehdurchführungsanordnung an dem hydraulischen Nehmerzylinder angeschlossen oder anschließbar ist, wobei über die Steuer-/Regel-Ventilanordnung einem die Drehdurchführungsanordnung umfassenden, die Steuer-/Regel-Ventilanordnung mit dem hydraulischen Nehmerzylinder verbindenden Hydrauliksystemabschnitt Druckmedium von der Druckmediumquelle zuführbar und Druckmedium aus dem Hydrauliksystemabschnitt in Richtung zu einer an der Steuer-/Regel-Ventilanordnung angeschlossenen Druckmediumaufnahme abführbar ist, welches Kupplungssystem sich erfindungsgemäß dadurch auszeichnet, dass eine die Steuer-/Regel-Ventilanordnung umfassende Druckmediumverbindung zwischen der Drehdurchführungsanordnung und der Druckmediumaufnahme wenigstens einen Abschnitt aufweist, der oberhalb eines durch die Drehdurchführungsanordnung definierten Höhenbereichs angeordnet ist, oder/und dass die Steuer-/Regel-Ventilanordnung in einem unbetätigten Ruhezustand in Richtung zur Druckmediumaufnahme im Wesentlichen abgeschlossen ist.

Nach dem Weiterbildungsvorschlag bzw. Erfindungsvorschlag wird erreicht, dass etwa bei abgestelltem Kraftfahrzeug kein Hydraulikmedium aus dem hydraulischen Nehmerzylinder über die Steuer-/Regel-Ventilanordnung zur Druckmediumaufnahme abfließen kann. Da der hydraulische Nehmerzylinder abgesehen von seinem Anschluss an einem Druckmediumkanal oder dergleichen bzw. der Drehdurchführung in der Regel (hier vorausgesetzt) druckmediumdicht ausgeführt ist, ist es nicht erforderlich, dass der wenigstens eine Abschnitt der Druckmediumverbindung oberhalb des Höhenbereichs des hydraulischen Nehmerzylinders angeordnet ist. Einem Abfluss von Druckmedium aus Bereichen des hydraulischen Nehmerzylinders, die oberhalb des Höhenbereichs angeordnet sind, steht die Ausbildung eines entsprechenden Unterdrucks im hydraulischen Nehmerzylinder entgegen. Soweit aufgrund einer anderen Ausführung des hydraulischen Nehmerzylinders und dessen Anschlüssen hingegen doch ein Abfließen von Hydraulikmedium aus der Druckkammer zu befürchten ist, sollte der wenigstens eine Abschnitt der Druckmediumverbindung oberhalb eines durch den hydraulischen Nehmerzylinder bzw. dessen Druckkammer definierten Höhenbereichs angeordnet sein, um die Vorteile des Weiterbildungsvorschlags bzw. Erfindungsvorschlags voll zu erzielen.

Sorgt man dafür, dass die Steuer-/Regel-Ventilanordnung in einem unbetätigten Ruhezustand in Richtung zur Druckmediumaufnahme im Wesentlichen abgeschlossen ist, kann ein Abfließen von Druckmedium aus dem hydraulischen Nehmerzylinder über die Steuer-/Regel-Ventilanordnung unabhängig von der Höhenanordnung der Ventilanordnung bzw. dem Verlauf der Druckmediumverbindung zuverlässig verhindert werden. Beispielsweise kann man die Steuer-/Regel-Ventilanordnung mit wenigstens einem 3/3-Wege-Ventil ausführen, das dann, wenn es nicht erregt wird, den Ausgang zur Druckmediumaufnahme selbsttätig verschließt.

Eine zweckmäßige Ausgestaltung des Kupplungssystems zeichnet sich dadurch aus, dass die Steuer-/Regel-Ventilanordnung oberhalb des durch die Drehdurchführungsanordnung (bzw. des hydraulischen Nehmerzylinders) definierten Höhenbereichs angeordnet ist.

Die Drehdurchführungsanordnung wird in der Regel mit einer zwischen einem Drehdurchführungsstator und einem Drehdurchführungsrotor wirksamen Dichtungsanordnung ausgeführt sein, die wenigstens einen Druckmediumaufenthaltsbereich zwischen dem Drehdurchführungsstator und dem Drehdurchführungsrotor nach außen abdichtet. Hierfür wird weiterbildend vorgeschlagen, dass die Dichtungsanordnung eine erste Dichtungsstufe und eine der ersten Dichtungsstufe in Richtung nach außen nachgeschaltete zweite Dichtungsstufe aufweist, wobei die zweite Dichtungsstufe eine größere Dichtungswirkung als die erste Dichtungsstufe aufweist. Dieser Weiterbildungsvorschlag ist auch unabhängig von den Erfindungsvorschlägen nach dem ersten und dem zweiten Aspekt von Interesse. Demgemäß stellt die Erfindung nach einem dritten Aspekt ein Kupplungssystem bereit, umfassend eine Kupplungseinrichtung für die Anordnung in einem Kraftfahrzeug-Antriebsstrang zur Momentenübertragung zwischen einer Antriebseinheit und einem Getriebe des Antriebsstrangs, wobei die Kupplungseinrichtung wenigstens eine Kupplungsanordnung mit einer einer Abtriebswelle der Antriebseinheit zugeordneten Eingangsseite und einer einer Getriebeeingangswelle bzw. zugeordneten Ausgangsseite aufweist und vermittels wenigstens eines in die Kupplungseinrichtung integrierten, sich im Betrieb mitdrehenden hydraulischen Nehmerzylinders betätigbar ist, wobei das Kupplungssystem eine stationär angeordnete Steuer-/Regel-Ventilanordnung umfasst, die einerseits an einer hydraulischen Druckmediumquelle und andererseits über eine Drehdurchführungsanordnung an dem hydraulischen Nehmerzylinder angeschlossen oder anschließbar ist, wobei die Drehdurchführungsanordnung mit einer zwischen einem Drehdurchführungsstator und einem Drehdurchführungsrotor wirksamen Dichtungsanordnung ausgeführt ist, die wenigstens einen Druckmediumaufenthaltsbereich zwischen dem Drehdurchführungsstator und dem Drehdurchführungsrotor nach außen abdichtet, welches Kupplungssystem sich erfindungsgemäß dadurch auszeichnet, dass die Dichtungsanordnung eine erste Dichtungsstufe und eine der ersten Dichtungsstufe in Richtung nach außen nachgeschaltete zweite Dichtungsstufe aufweist, wobei die zweite Dichtungsstufe eine größere Dichtungswirkung als die erste Dichtungsstufe aufweist.

Nach dem Erfindungsvorschlag bzw. Weiterbildungsvorschlag wird für eine besonders hohe Dichtheit der Drehdurchführungsanordnung gesorgt, so dass die oben angesprochenen Probleme zumindest deutlich gemildert sind.

Die erste Dichtungsstufe kann vorteilhaft für einen an die anliegenden primären Druckmediumdruck als Drosselstufe wirken, so dass an der zweiten Dichtungsluke ein gegenüber dem primären Druckmediumdruck deutlich reduzierter sekundärer Druckmediumdruck anliegt. Dies macht es möglich, für die zweite Dichtungsstufe eine Dichtungsanordnung zu verwenden, die dann, wenn der primäre Druck an ihr unmittelbar anliegen würde, ein zu großes Reibmoment erzeugen würde. Dies würde entsprechende Verluste und überdies die Gefahr einer Zerstörung des Dichtungswerkstoffs aufgrund zu großer Wärmeentwicklung mit sich bringen. So kann man für die zweite Dichtungsstufe vorteilhaft wenigstens einen Radialwellendichtring verwenden. Die erste Dichtungsstufe kann zweckmäßig mit wenigstens einem (gewünschtenfalls geschlitzten) Dichtungsring vorzugsweise auf Teflonbasis ausgeführt sein.

Durch die zweistufige Ausbildung der Dichtungsanordnung der Drehdurchführungsanordnung kann an sich gegenläufigen bzw. sich widersprechenden Anforderungen und Randbedingungen genügt werden, beispielsweise einerseits eine hohe Dichtheit und andererseits eine einfache Fertigung und Montage.

Es wurde schon angesprochen, dass die Kupplungsanordnung als Lamellen-Kupplungsanordnung ausgeführt sein kann. Dieser kann im Betrieb mittels einer zugeordneten, stationär angeordneten Betriebsmediumpumpenanordnung über die Drehdurchführungsanordnung ein Betriebsmedium, insbesondere ein Kühlöl, für einen Betrieb unter Einwirkung des Betriebsmediums (insbesondere für einen nasslaufenden Betrieb) zuführbar sein.

Die hydraulische Druckmediumquelle kann mit einer Druckmediumpumpenanordnung und gewünschtenfalls einem Druckmediumspeicher zur Speicherung unter Druck stehenden Druckmediums ausgeführt sein.

Eine bevorzugte Ausgestaltung des Kupplungssystems insbesondere nach dem ersten Aspekt der Erfindung zeichnet sich dadurch aus, dass eine Förderpumpenanordnung zur Förderung von Druckmedium aus einer unterhalb des Höhenbereichs angeordneten Druckmediumaufnahme, ggf. Ölsumpf, in das Druckmediumreservoir vorgesehen ist. Mittels der Förderpumpenanordnung kann im Betrieb für einen steten Nachfluss von Druckmedium in das Druckmediumreservoir gesorgt werden, so dass etwa bei abgestelltem Kraftfahrzeug eine hinreichende Menge an Druckmedium darin enthalten ist, um an wenigstens einer Leckagestelle anstehendes Druckmedium oder/und über wenigstens eine Zuflussstelle in den Hydrauliksystemabschnitt nachfließendes Druckmedium bereitzustellen, und zwar vorzugsweise bei einem hinreichenden, durch die Schwerkraft bedingten Druck.

Die Förderpumpenanordnung kann als Betriebsmediumpumpenanordnung oder/und als Druckmediumpumpenanordnung dienen. In diesem Fall ist das Druckmediumreservoir Teil einer Betriebsmediumverbindung oder/und einer Druckmediumverbindung zwischen der Förderpumpenanordnung und der Drehdurchführungsanordnung. Hierfür wird man das Druckmediumreservoir entsprechend dafür auslegen, wenigstens einem maximal auftretenden Betriebsmediumdruck bzw. wenigstens einem maximal auftretenden Druckmediumdruck standzuhalten.

Ist das Druckmediumreservoir Teil der Betriebsmediumverbindung bzw. Druckmediumverbindung, so muss in dem Druckmediumreservoir ein entsprechender Mediumdruck aufbaubar sein. Hierfür muss das Druckreservoir entsprechend druckdicht ausgeführt sein. Dies bedeutet umgekehrt, dass nach Abbau dieses Drucks ein (weiterer) Abfluss von Medium aus dem Reservoir aufgrund von auftretendem Unterdruck unterbunden oder zumindest gestört werden könnte. Damit Druckmedium zum Anstehen an wenigstens einer Leckagestelle oder/und zum Nachfließen über wenigstens eine Zuflussstelle in den Hydrauliksystemabschnitt auf Grundlage des Druckmediumsreservoirs zur Verfügung gestellt werden kann, wird weiterbildend vorgeschlagen, dass das Druckmediumreservoir belüftbar ist. Bevorzugt ist in diesem Zusammenhang, dass das Druckmediumreservoir eine Belüftungsanordnung aufweist, die in einem ersten Zustand das Druckmediumreservoir nach außen druckdicht abschließt und in einem zweiten Zustand eine Belüftungsverbindung nach außen öffnet, wobei die Belüftungsanordnung der zweite Zustand vorzugsweise einem unbetätigten Ruhezustand der Belüftungsanordnung entspricht.

Soweit eine eigenständige Betriebsmediumpumpenanordnung vorgesehen ist, kann diese vorteilhaft mit ihrer Ansaugseite an dem Druckmediumreservoir angeschlossen sein. Soweit eine eigenständige Druckmediumpumpenanordnung vorgesehen ist, so kann diese vorteilhaft mit ihrer Ansaugseite an dem Druckmediumreservoir angeschlossen sein.

Bevorzugt ist wenigstens eine Druckmediumabflussstelle des Druckmediumreservoirs, die mit der Leckagestelle bzw. der Zuflussstelle in Druckmediumzuführverbindung steht oder bringbar ist, die tiefste wesentliche Druckmediumabflussstelle des Druckmediumreservoirs. Andere Druckmediumabflussstellen sind z. B. der Anschluss zur Druckmediumpumpenanordnung bzw. zum Druckmediumeingang der Drehdurchführungsanordnung und der Anschluss zur Betriebsmediumpumpenanordnung bzw. zum Betriebsmediumeingang der Drehdurchführungsanordnung. Man sollte auf jeden Fall vorsehen, dass die mit der Leckagestelle bzw. der Zuflussstelle in Druckmediumzuführverbindung stehende Druckmediumabflussstelle tiefer liegt als der Anschluss zur Betriebsmediumpumpenanordnung bzw. zum Betriebsmediumeingang der Drehdurchführungsanordnung, da über diesen Anschluss im Betrieb und ggf. auch bei stillstehendem Kraftfahrzeug ein nennenswerter Abfluss von Druckmedium erfolgen kann, so dass bei einer anderen relativen Anordnung der Abflussstellen der Druckmediumspiegel unter die der der Zuflussstelle bzw. Leckagestelle zugeordnete Abflussstelle fallen könnte. Über den Anschluss zur Druckmediumpumpenanordnung bzw. zum Druckmediumeingang der Drehdurchführungsanordnung kann in der Regel nur ein eher geringer Abfluss von Druckmedium erfolgen, so dass es auf die Anordnung dieses Anschlusses insoweit weniger ankommt.

Betreffend den Erfindungsvorschläg nach dem ersten Erfindungsaspekt wird vor allem daran gedacht, dass aus dem Druckmediumreservoir der Drehdurchführungsanordnung Druckmedium zuführbar ist, derart, dass i) Druckmedium an wenigstens einer Leckagestelle der Drehdurchführungsanordnung auf der Abflusseite ansteht oder/und ii) Druckmedium über wenigstens eine Zuflussstelle der Drehdurchführungsanordnung in den Hydrauliksystemabschnitt nachfließt. Dabei kann das Druckmediumreservoir angeschlossen oder anschließbar sein an dem oben angesprochenen Druckmediumsaufenthaltsbereich der Drehdurchführung, ggf. an einem der ersten Dichtungsstufe zugeordneten inneren Druckmediumsaufenthaltsbereich. Im Zusammenhang mit einer Kupplungsanordnung, die zwei unabhängig voneinander betätigbare hydraulische Nehmerzylinder aufweist, wird in diesem Zusammenhang vor allem daran gedacht, dass das Druckmediumreservoir angeschlossen oder anschließbar ist an einem Zwischen-Druckmediumsaufenthaltsbereich, der zwischen einem einem ersten hydraulischen Nehmerzylinder zugeordneten ersten inneren Druckmediumsaufenthaltsbereich und einem einem zweiten hydraulischen Nehmerzylinder zugeordneten zweiten inneren Druckmediumsaufenthaltsbereich angeordnet ist.

Es wurde eingangs schon erwähnt, dass es sich bei dem Kupplungssystem um ein System mit einer als Mehrfach-Kupplungseinrichtung, insbesondere Doppel-Kupplungseinrichtung ausgeführten Kupplungseinrichtung handeln kann. Die Kupplungseinrichtung weist dann eine einer ersten Getriebeeingangswelle des Getriebes zugeordnete erste Kupplungsanordnung und eine einer zweiten Getriebeeingangswelle des Getriebes zugeordnete zweite Kupplungseinrichtung auf, die mittels einen/des ersten bzw. zweiten hydraulischen Nehmerzylinders unabhängig voneinander betätigbar sind. Bei den beiden Kupplungsanordnungen kann es sich jeweils um eine Lamellen-Kupplungsanordnung handeln.

Die Erfindung stellt nach dem ersten Aspekt allgemeiner auch ein Betätigungssystem bereit, umfassend wenigstens einen drehbar angeordneten, in wenigstens einem Betriebszustand rotierenden hydraulischen Nehmerzylinder, mit einer stationär angeordneten Steuer-/Regel-Ventilanordnung, die einerseits an einer hydraulischen Druckmediumquelle und andererseits über eine Drehdurchführungsanordnung an dem hydraulischen Nehmerzylinder angeschlossen oder anschließbar ist. Nach dem ersten Erfindungsaspekt weist dieses Betätigungssystem ein Druckmediumreservoir auf, welches oberhalb eines durch die Drehdurchführungsanordnung definierten Höhenbereichs angeordnet ist und aus dem einem die Drehdurchführungsanordnung umfassenden, die Steuer-/Regel-Ventilanordnung mit dem hydraulischen Nehmerzylinder verbindenden Hydrauliksystemabschnitt Druckmedium zuführbar ist, derart, dass i) Druckmedium an wenigstens einer Leckagestelle auf der Abflussseite ansteht, um einem Abfluss von Druckmedium aus dem Hydrauliksystemabschnitt entgegenzuwirken oder/und ii) Druckmedium über wenigstens eine Zuflussstelle in den Hydrauliksystemabschnitt nachfließt, um einen Abfluss von Druckmedium aus dem Hydrauliksystemabschnitt auszugleichen.

Nach dem zweiten Erfindungsaspekt stellt die Erfindung ferner allgemeiner auch ein Betätigungssystem bereit, umfassend wenigstens einen drehbar angeordneten, in wenigstens einem Betriebszustand rotierenden hydraulischen Nehmerzylinder, mit einer stationär angeordneten Steuer-/Regel-Ventilanordnung, die einerseits an einer hydraulischen Druckmediumquelle und andererseits über eine Drehdurchführungsanordnung an dem hydraulischen Nehmerzylinder angeschlossen oder anschließbar ist, wobei über die Steuer-/Regel-Ventilanordnung einem die Drehdurchführungsanordnung umfassenden, die Steuer-/Regel-Ventilanordnung mit dem hydraulischen Nehmerzylinder verbindenden Hydrauliksystemabschnitt Druckmedium von der Druckmediumquelle zuführbar und Druckmedium aus dem Hydrauliksystemabschnitt in Richtung zu einer an der Steuer-/Regel-Ventilanordnung angeschlossenen Druckmediumaufnahme abführbar ist. Für dieses Betätigungssystem wird nach dem zweiten Erfindungsaspekt vorgeschlagen, dass eine Druckmediumverbindung zwischen der Drehdurchführungsanordnung und der Druckmediumaufnahme wenigstens einen Abschnitt aufweist, der oberhalb eines durch die Drehdurchführungsanordnung definierten Höhenbereichs angeordnet ist, oder/und dass die Steuer-/Regel-Ventilanordnung in einem unbetätigten Ruhezustand in Richtung zur Druckmediumaufnahme im Wesentlichen abgeschlossen ist. Die Steuer-/Regel-Ventilanordnung kann vorteilhaft oberhalb des durch die Drehdurchführungsanordnung definierten Höhenbereichs angeordnet sein.

Die Erfindung stellt nach dem dritten Erfindungsaspekt allgemeiner ferner ein Betätigungssystem bereit, umfassend wenigstens einen drehbar angeordneten, in wenigstens einem Betriebszustand rotierenden hydraulischen Nehmerzylinder, mit einer stationär angeordneten Steuer-/Regel-Ventilanordnung, die einerseits an einer hydraulischen Druckmediumquelle und andererseits über eine Drehdurchführungsanordnung an dem hydraulischen Nehmerzylinder angeschlossen oder anschließbar ist, wobei die Drehdurchführungsanordnung mit einer zwischen einem Drehdurchführungsstator und einem Drehdurchführungsrotor wirksamen Dichtungsanordnung ausgeführt ist, die wenigstens einen Druckmediumaufenthaltsbereich zwischen dem Drehdurchführungsstator und dem Drehdurchführungsrotor nach außen abdichtet. Hierfür wird nach dem vierten Erfindungsaspekt vorgeschlagen, dass die Dichtungsanordnung eine erste Dichtungsstufe und eine der ersten Dichtungsstufe in Richtung nach außen nachgeschaltete zweite Dichtungsstufe aufweist, wobei die zweite Dichtungsstufe eine größere Dichtungswirkung als die erste Dichtungsstufe aufweist. Die erste Dichtungsstufe kann vorteilhaft für einen an ihr anliegenden primären Druckmediumdruck als Drosselstufe wirken, so dass an der zweiten Dichtungsstufe ein gegenüber dem primären Druckmediumdruck deutlich reduzierter sekundärer Druckmediumdruck anliegt.

Die sich auf ein Betätigungssystem beziehenden Erfindungsvorschläge nach dem ersten, zweiten und dritten Aspekt können für sich alleine oder - bevorzugt - in Kombination realisiert werden (erster Aspekt oder/und zweiter Aspekt oder/und dritter Aspekt). Weiterbildungsmöglichkeiten für das Betätigungssystem ergeben sich aus den obigen Vorschlägen zum erfindungsgemäßen Kupplungssystem nach dem ersten oder/und zweiten oder/und dritten Aspekt, wobei insbesondere auf diejenigen Merkmale Bezug genommen wird, die sich direkt oder indirekt auf das Druckmediumreservoir oder/und die Drehdurchführungsanordnung bzw. deren Dichtungsanordnung beziehen.

Die Erfindung wird im Folgenden anhand von in den Figuren gezeigten Ausführungsbeispielen näher erläutert.
- Fig. 1: zeigt in einer schematischen, beispielhaften Darstellung eine Grundstruktur eines Kupplungssystems, vorliegend eines Kupplungssystems mit zwei nasslaufenden Lamellen-Kupplungsanordnungen, von dem die Erfindung ausgeht.
- Fig. 2: zeigt ein Ausführungsbeispiel für eine erfindungsgemäße Ausgestaltung des Kupplungssystems der Fig. 1.
- Fig. 3: zeigt schematisch ein Detail des erfindungsgemäßen Kupplungssystems der Fig. 2.
- Fig. 4: veranschaulicht eine Ausführungsvariante des Kupplungssystems der Fig. 2.
- Fig. 5: zeigt ein weiteres Beispiel für eine erfindungsgemäße Ausgestaltung des Kupplungssystems der Fig. 1.

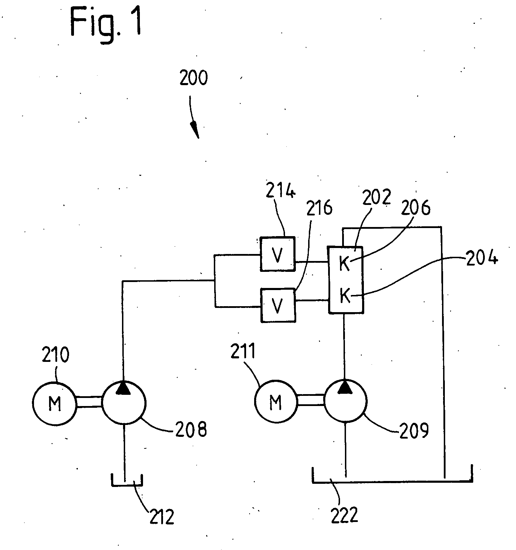

Fig. 1 zeigt schematisch ein Kupplungssystem 200, das eine nasslaufende Doppelkupplung 202 mit einer ersten, radial äußeren Kupplungsanordnung 206 und einer zweiten, radial inneren Kupplungsanordnung 204 aufweist. Bei den Kupplungsanordnungen 204 und 206 handelt es sich um nasslaufende Lamellen-Kupplungsanordnungen, die auf an sich bekannte Weise jeweils wenigstens ein Lamellenpaket aufweisen, die beim vorliegenden Ausführungsbeispiel radial übereinander angeordnet sind und jeweils durch einen zugeordneten Betätigungskolben eines in die Doppelkupplung integrierten hydraulischen Nehmerzylinders betätigt werden. Die Doppelkupplung dient zur Momentenübertragung zwischen einer Antriebseinheit (insbesondere Verbrennungsmotor oder Brennkraftmaschine) und einem Getriebe (insbesondere Doppelkupplungs- oder Lastschaltgetriebe) in einem Kraftfahrzeug-Antriebsstrang.

Das Kupplungssystem 200 weist zwei voneinander unabhängige Pumpen, nämlich eine erste Pumpe 208 und eine zweite Pumpe 209 auf, die vorzugsweise jeweils durch einen Elektromotor 210 beziehungsweise 211 angetrieben werden. Es kommt auch ein verbrennungsmotorischer Antrieb der Pumpen in Betracht. Die erste, beispielsweise als hydrostatische Pumpe beziehungsweise Verdrängungsmaschine ausgeführte Pumpe 208 stellt Druckmedium, insbesondere Drucköl, bei einem vergleichsweise hohen Druck bereit, der zur Betätigung der Kupplungsanordnungen 204 und 206 der Doppelkupplung 202 ausreicht. Zur wahlweisen Betätigung der Kupplungsanordnungen sind diese, genauer deren hydraulischen Nehmerzylinder, jeweils über ein zugeordnetes Ventil 214 beziehungsweise 216 an der Pumpe 208 angeschlossen. Die Pumpe saugt Druckmedium aus einem Reservoir 212 an.

Die zweite, beispielsweise ebenfalls als hydrostatische Pumpe bzw. Verdrängermaschine oder - alternativ - als hydrodynamische Pumpe beziehungsweise Strömungsmaschine ausgeführte Pumpe 209 stellt einen vergleichsweise großen Volumenstrom an Kühlmedium, insbesondere Kühlöl, bereit, das zur Kühlung der Kupplungsanordnungen 204 und 206 dient. Die durch eine zugeordnete Steuereinheit bedarfsweise an- und ausschaltbare und vorzugsweise in der Pumpleistung einstellbare Pumpe 209 saugt das Kühlmedium, gegebenenfalls Öl, aus einem Reservoir 222 an. Es sei angemerkt, dass es nicht zwingend ist, dass es sich bei dem Reservoir 222 um ein gegenüber dem Reservoir 212 gesondertes Reservoir handelt.

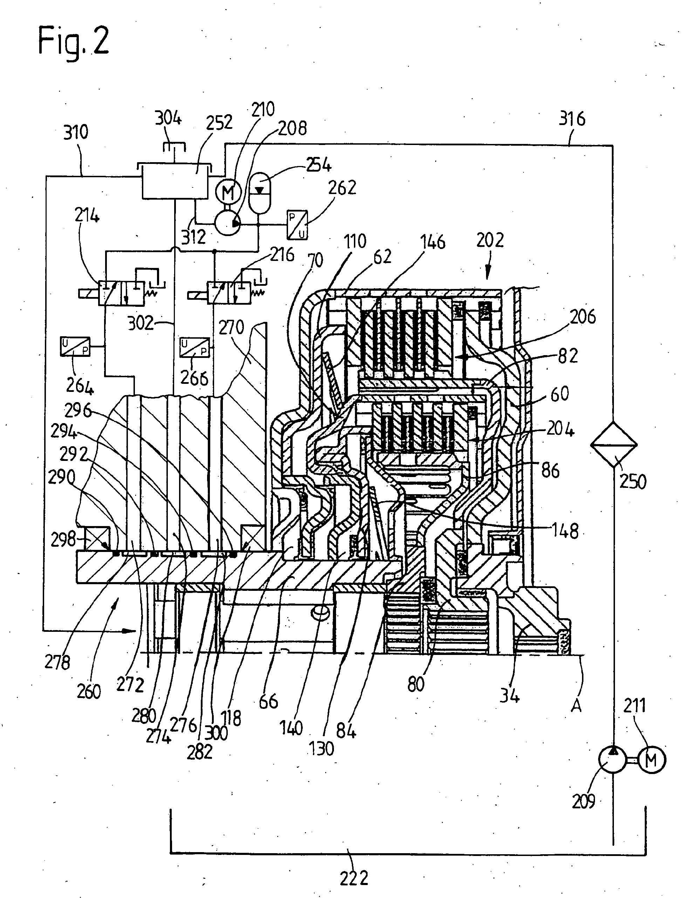

Fig. 2 zeigt mit der Doppelkupplung 202 ein Beispiel für eine im Zusammenhang mit der Erfindung einsetzbare Doppelkupplung. Die Doppelkupplung 202 ist in einer Einbausituation in einem Antriebsstrang zwischen einer Antriebseinheit und einem Getriebe gezeigt (die Antriebseinheit selbst und ihre Abtriebswelle, ggf. Kurbelwelle, ist in Fig. 2 nicht dargestellt). Eine Eingangsnabe 34 der Doppelkupplung 202 steht mit einem Koppelende der Abtriebswelle über eine nicht dargestellte Torsionsschwingungsdämpferanordnung in Drehmomentübertragungsverbindung. Zwei nicht dargestellte, koaxial verlaufende Getriebeeingangswellen stehen mit Naben 80 und 84 eines jeweiligen Innenlamellenträgers 82 bzw. 86 der radial äußeren Lamellen-Kupplungsanordnung 206 bzw. der radial inneren Lamellen-Kupplungsanordnung 204 in Drehmitnahmeverbindung. Über ein Koppelglied 60 sind ein Außenlamellenträger 62 der radial äußeren Lamellen-Kupplungsanordnung und - über ein Ring- oder Hülsenteil 66 - ein Außenlamellenträger 70 der radial inneren Lamellen-Kupplungsanordnung drehfest an der Eingangsnabe 34 angeschlossen. Die Außenlamellenträger dienen als Eingangsseite der jeweiligen Lamellen-Kupplungsanordnung und die Innenlamellenträger dienen als Ausgangsseite der jeweiligen Lamellen-Kupplungsanordnung. Die Kupplungsanordnungen lassen sich jeweils über einen hydraulischen Nehmerzylinder 118 bzw. 140, die einen Betätigungskolben 110 bzw. 130 aufweisen, im Sinne eines Einrückens betätigen. Die hydraulischen Nehmerzylinder 118 und 140 sind über Kanäle im auch als Nabe bezeichenbaren Ringteil 66 an Steuer-/Regel-Ventilen angeschlossen, wie im Folgenden noch näher erläutert wird. Zum Ausrücken der Kupplungsanordnungen ist den Betätigungskolben eine Tellerfederanordnung 146 bzw. 148 zugeordnet. Durch die nicht dargestellten, als Hohlwellen ausgeführten Getriebeeingangswellen kann sich noch eine Ölpumpenantriebswelle einer von der Antriebseinheit mit angetriebenen Ölpumpe erstrecken und mit der Eingangsnabe 34 in Drehmitnahmeverbindung stehen.

Die in Fig. 2 gezeigte Doppelkupplungskonstruktion entspricht im Wesentlichen (von gewissen, hier nicht interessierenden Änderungen abgesehen) einer Doppelkupplungskonstruktion, die in verschiedenen deutschen Patentanmeldungen der Anmelderin beschrieben ist. Es wird insbesondere auf die Offenlegungsschriften DE 100 04 179 A1, DE 100 04 186 A1, DE 100 04 189 A1, DE 100 04 190 A1 und DE 100 04 195 A1 verwiesen, deren Offenbarung in den Offenbarungsgehalt der vorliegenden Anmeldung einbezogen wird. Es wird hierzu darauf hingewiesen, dass die Doppelkupplung 202 in Fig. 2 der vorliegenden Anmeldung weitgehend der Fig. 1 dieser zu einer Patentfamilie gehörenden Anmeldungsserie entspricht. In der in Bezug genommenen Fig. 1 der genannten Offenlegungsschriften tragen die Kupplungsanordnungen 204 und 206 die Bezugszeichen 64 und 72; ansonsten sind in dieser Fig. 1 und in der Fig. 2 dieser Anmeldung für einander entsprechende Bauteile weitgehend die gleichen Bezugszeichen verwendet.

Die Bereitstellung von Drucköl zur Betätigung der Kupplungsanordnungen 204 und 206 und von Kühlöl zur Zufuhr zu den Kupplungsanordnungen im Betrieb erfolgt gemäß dem Ausführungsbeispiel der Fig. 2 wie folgt. Aus dem tiefer als die Doppelkupplung 202 liegenden Reservoir 222, beispielsweise einem Ölsumpf in der Getriebegehäuseglocke, saugt die elektromotorisch oder verbrennungsmotorisch angetriebene Kühlölpumpe 209 Kühlöl an, das über einen druckseitigen Ölfilter 250 und ein druckdichtes Reservoir 252 und entsprechende Ölleitungen axial zwischen den Getriebeeingangswellen bzw. zwischen der Getriebewellenanordnung und dem Ringteil 66 ins Innere der Doppelkupplung 202 zugeführt wird (vgl. DE 100 04 179 A1). Das aus dem Reservoir 222 angesaugte Öl kann zusätzlich noch über einen Wärmetauscher geführt werden. Es kann im Betrieb eine ständige Durchströmung des Reservoirs 252 mit Öl vorgesehen sein, insbesondere weil in der Regel permanent ein gewisser Kühlölvolumenstrom zur Beibehaltung des Reibwertverlaufs der Kupplungsanordnungen benötigt wird. Der Volumenstrom ist dabei größer als derjenige Ölvolumenstrom, der zur Betätigung der Kupplungsanordnungen benötigt wird.

Die elektromotorisch oder verbrennungsmotorisch angetriebene Druckölpumpe 208 saugt aus dem Reservoir 252 dahin enthaltenes Öl alsk Drucköl an und stellt es auf einem Betätigungsdruckniveau für die Betätigung der Kupplungsanordnungen vermittels der Steuer-/Regel-Ventile 214 und 216 bereit. Der Pumpe 208 ist noch ein ein unter Druck stehendes Gaspolster aufweisender Druckölspeicher 254 nachgeschaltet, der von der Pumpe 208 über ein nicht dargestelltes Rückschlagventil geladen wird und über die Ventile 214 und 216 und eine Drehdurchführung 260 an den hydraulischen Nehmerzylindern bzw. deren Druckräumen der beiden Kupplungsanordnungen 204 und 206 angeschlossen ist. Der Druckölspeicher 254 sorgt für ein gleichmäßiges Druckniveau und ermöglicht, dass als Pumpe 208 eine Pumpe mit relativ kleinem Fördervolumen ausreicht. Der durch den Füllzustand des Speichers 254 bestimmte Druck in einem Druckölkreis zwischen dem angesprochenen Rückschlagventil und den Ventilen 214 und 216 wird durch einen Drucksensor 262 erfasst. Der Drucksensor kann damit zur Überwachung des Ladezustands des Speichers 254 eingesetzt werden. Der von den Ventilen 214 und 216 durchgelassene Betätigungsdruck wird von einem jeweiligen Drucksensor 264 bzw. 266 erfasst, die jeweils den erfassten Druck in Form eines elektrischen Signals an eine elektronische Steuereinheit rückmelden. Die Ventile werden von der elektronischen Steuereinheit angesteuert, und zwar auf Grundlage der von den Sensoren 264 und 266 erfassten Drücke und wenigstens einem eine Soll-Kupplungsbetätigung angebenden Führungssignal. Vorzugsweise bilden die Steuereinheit, das Ventil 214 und der Drucksensor 264 einen ersten Regelkreis und bilden die Steuereinheit, das Ventil 216 und der Sensor 266 einen zweiten Regelkreis, um eine geregelte Betätigung für beide Kupplungsanordnungen 204 und 206 vorzusehen. Zur Vermeidung von Beschädigungen aufgrund zu hohen Drucks können in dem angesprochenen Druckölkreis zwischen Rückschlagventil und den Steuer-/Regel-Ventilen 214, 216 und in die an die Ventile 214 und 216 anschließende Betätigungsstrecken Druckbegrenzungsventile integriert sein.

Die Drehdurchführung 260 ist von einer bezogen auf die Drehachse A der Doppelkupplung 202 axial und koaxial zu dieser verlaufenden Bohrung in einen Gehäuseabschnitt 270 des Getriebegehäuses, dem in diese Bohrung axial eingeschobenen Ringteil 66 und einer zwischen dem als Stator der Drehdurchführung dienenden, die Bohrung aufweisenden Getriebegehäuseabschnitt 270 und dem Ringteil 66 wirkenden Dichtungsanordnung gebildet. Im Getriebegehäuseabschnitt 270 sind radial verlaufende, in der Innenumfangsfläche der Bohrung mündende Bohrungen 272, 274 und 276 ausgeführt, von denen die Bohrungen 272 und 276 zu einer jeweiligen Druckölverbindung zwischen dem Ventil 214 bzw. 216 und einer jeweiligen Druckkammer des jeweils zugeordneten hydraulischen Nehmerzylinders gehören. An diese Bohrungen 272 und 276 schließen sich jeweils wenigstens ein axial verlaufender Ölkanal im Ringteil 66 an, der mit der betreffenden Druckkammer über eine radial verlaufende Bohrung verbunden ist. Über entsprechende radial verlaufende Bohrungen stehen diese Kanäle mit einer Ringnut 278 bzw. 282 im Außenumfang des Ringteils 66 in Verbindung, in die die gehäusefeste Bohrung 272 bzw. 282 mündet. Eine entsprechende, zwischen den beiden Ringnuten 278 und 282 angeordnete Ringnut 280 ist auch der zwischen den Bohrungen 272 und 276 angeordneten Bohrung 274 zugeordnet.

Die Bohrung 272 und die ihr zugeordnete Ringnut 278 ist nach außen und zur Bohrung 274 und der dieser zugeordneten Ringnut 280 hin durch Dichtringe 290, 292 abgedichtet, die in einer jeweiligen Ringnut des Ringteils 66 angeordnet sind. In entsprechender Weise ist die Bohrung 276 und die dieser zugeordnete Ringnut 282 nach außen und zur Bohrung 274 bzw. der dieser zugeordneten Ringnut 280 hin durch Dichtringe 294, 296 abgedichtet, die ebenfalls jeweils in einer Ringnut des Ringteils 66 aufgenommen sind. Die Dichtungsringe 290, 292, 294 und 296 können im Hinblick auf ein einfaches Zusammenbauen der Drehdurchführung durch einfaches Einschieben des Ringteils 66 samt der daran angeordneten Dichtungsringe in die Gehäusebohrung als geschlitzte Teflon-Ringe ausgeführt sein.

Nach einem Erfindungsgedanken der vorliegenden Anmeldung ist dem eine erste Abdichtungsstufe nach außen bildenden Dichtungsring 290 eine zweite Abdichtungsstufe 298 vorzugsweise in Form eines Radialwellendichtrings, und ist dem auf der anderen axialen Seite eine erste Abdichtungsstufe nach außen bildenden Dichtungsring 296 eine zweite Abdichtungsstufe 300, vorzugsweise in Form eines Radialwellendichtrings, nachgeschaltet, um so die Drehdurchführung 160 nach außen hin sehr zuverlässig abzudichten und ein Leerlaufen der Druckkammern der beiden hydraulischen Nehmerzylinder, etwa bei abgestelltem Kraftfahrzeug, so weit als möglich zu verhindern. Die erste Dichtungsstufe in Form des einfachen Teflon-Rings 290 bzw. 296 oder dergleichen hält von den zweiten Dichtungsstufen, insbesondere den Radialwellendichtringen 298 und 300, im Betrieb den Betätigungsdruck fern, wirkt also als Drosselstufe, so dass die Radialwellendichtringe nur vergleichsweise wenig auf Druck belastet werden und es dementsprechend zu keiner wesentlichen druckinduzierten Reibung zwischen dem getriebegehäuseseitig festgelegten Radialwellendichtring 298 bzw. 300 und dem Ringteil 66 kommt.

Die beiden Steuer-/Regel-Ventile 214 und 216 sind als 2/3-Wege-Ventile ausgeführt, die über eine Ablassleitung an einem Reservoir, beispielsweise dem Reservoir 222 angeschlossen sind, um zum Auskuppeln Drucköl aus dem der jeweiligen Druckkammer des betreffenden hydraulischen Nehmerzylinders zugeordneten Hydrauliksystemabschnitt Drucköl ablassen zu können. Um in einem unbetätigten Ruhezustand, beispielsweise bei abgestelltem Kraftfahrzeug, ein Abfließen von Drucköl aus den den Druckkammern zugeordneten Hydrauliksystemabschnitten und damit das Eintreten von Luft in den betreffenenden Hydrauliksystemabschnitt bzw. in den hydraulischen Nehmerzylinder zu verhindern, ist nach einem weiteren Erfindungsgedanken der vorliegenden Anmeldung die Druckölverbindung zwischen dem an dem jeweiligen Ventil angeschlossenen Reservoir, insbesondere Ölsumpf, und der Drehdurchführung derart ausgeführt, dass sie wenigstens einen oberhalb der Drehdurchführung angeordneten Abschnitt aufweist. Vorzugsweise sind die Steuer-/Regel-Ventile 214 und 216 selbst oberhalb der Drehdurchführung angeordnet. Damit können, etwa bei abgestelltem Kraftfahrzeug, im Ruhezustand die Druckkammern bzw. hydraulischen Nehmerzylinder 118 und 140 nicht leerlaufen, selbst wenn die Ventile 214 und 216 an sich zum Reservoir hin offen sind. Das Drucköl wird in diesem Fall in den oberhalb der Drehdurchführung liegenden Abschnitten des jeweiligen Druckraums auf Grundlage einer sich einstellenden Unterdruckwirkung gehalten. Eine andere Möglichkeit, zuverlässig einen Abfluss von Drucköl aus den Hydrauliksystemabschnitten bzw. aus den hydraulischen Nehmerzylindern und damit ein Eintreten von Luft in den jeweiligen Hydrauliksystemabschnitt bzw. den jeweiligen Nehmerzylinder zu verhindern, ist die Ausführung der Steuer-/Regel-Ventile 214 und 216 als derartige Ventile, die im Ruhezustand selbsttätig einen die Verbindung zum Ölablass-Reservoir schließenden Zustand einnehmen. Beispielsweise könnte man 3/3-Wege-Ventile einsetzen.

Nach einem weiteren Erfindungsgedanken der vorliegenden Anmeldung ist das Reservoir 252 oberhalb der Drehdurchführung angeordnet. Das im Reservoir befindliche Öl, das sowohl als Kühlöl als auch als Drucköl verwendet wird, steht über eine Leitung 302 und die Bohrung 274 an der Drehdurchführung an, und zwar - über die Ringnut 280 - an den Dichtringen 292 und 294. Im Betrieb steht das Kühlöl mit dem im Reservoir 252 herrschenden Druck an diesen Dichtungen an. Das Reservoir 252 ist mit einer Belüftungsanordnung 304 ausgeführt, die im Ruhezustand, also beispielsweise bei abgestelltem Kraftfahrzeug, das Reservoir 252 belüftet, so dass in diesem Zustand das Öl über die Bohrung 274 an den Dichtungen 292 und 294 mit einem Druck ansteht, der sich aus der Schwerkrafteinwirkung auf Grundlage der Höhendifferenz zwischen dem Reservoir 252 und der Drehdurchführung 260 ergibt.

Durch das an den Dichtungen 292 und 294 anstehende Öl wird ein selbsttätiger Ausgleich von etwaigen Rest-Leckagen aus den den beiden hydraulischen Nehmerzylindern zugeordneten Hydrauliksystemabschnitten, insbesondere von Rest-Leckagen an den Radialwellendichtringen 298 und 290, erreicht. Dieser Ausgleich würde prinzipiell auch ohne die Radialwellendichtringe 298 und 300 erreicht werden. Es müssten dann aber größere Leckageverluste ausgeglichen werden, so dass der Ölvorrat im Reservoir 252 unter Umständen nicht ausreichen würde. Es ist deshalb bevorzugt, sowohl die Radialwellendichtringe 298 und 300 als auch das oberhalb der Drehdurchführung angeordnete Reservoir 252 mit dem erläuterten Anschluss über die Leitung 302 und die Bohrung 274 an der Drehdurchführung gemeinsam vorzusehen. Im Falle einer elektromotorisch angetriebenen Pumpe 209 besteht grundsätzlich auch die Möglichkeit, den Ölvorrat im Reservoir bedarfsabhängig bzw. in Abhängigkeit vom Füllzustand des Reservoirs mittels dieser Pumpe unabhängig vom Betrieb des Kupplungssystems bzw. der Antriebseinheit wieder aufzufüllen, so auch bei abgestelltem Fahrzeug.

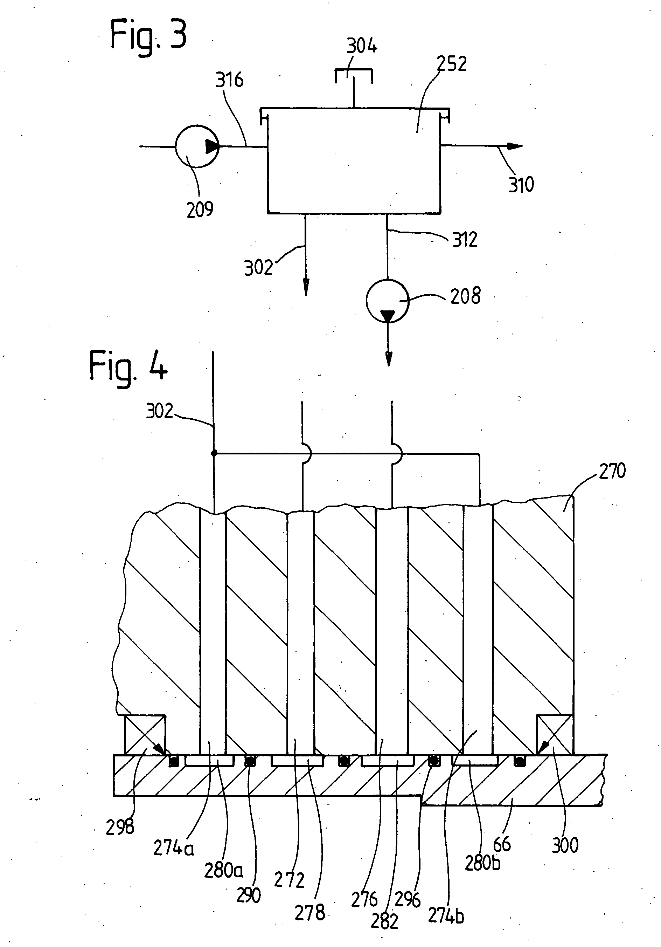

Fig. 4 zeigt eine Ausführungsvariante der Drehdurchführung. Hier sind die getriebeseitigen Druckölkanäle 272 und 276 nebeneinander zwischen einem jeweiligen Zusatzkanal 274a bzw. 274b in der Art des Kanals 274 der Fig. 2 angeordnet. Die Zusatzkanäle 274a und 274b, denen jeweils eine Ringnut 280a bzw. 280b im Ringteil 66 zugeordnet ist, stehen über die Leitung 302 mit dem nicht dargestellten Reservoir in Verbindung, so dass bei abgestelltem Kraftfahrzeug Drucköl an den Dichtungsringen 290 und 296 ansteht und einem Abfluss von Öl aus der Ringnut 278 bzw. 296 und damit aus dem dem jeweiligen hydraulischen Nehmerzylinder zugeordneten Hydrauliksystemabschnitt nach außen entgegenwirkt.

Bezug nehmend auf die Fig. 2 und Fig. 3 sollte die Abflussstelle aus dem Reservoir 252 in die Leitung 302, die der Bohrung 274 (bzw. den Bohrungen 274a und 274b gemäß Fig. 4) zugeordnet ist, derart angeordnet sein, dass zumindest unter normalen Bedingungen ein Abfallen des Ölspiegels im Reservoir 252 unter dieser Abflussstelle nichts befürchtet werden muss. Deswegen ist bei den in Fig. 2 und in Fig. 3 gezeigten Ausführungsbeispielen die Abflussstelle in einem Boden des Reservoirs vorgesehen und liegt damit, wie in Fig. 2 und 3 dargestellt, auf jeden Fall deutlich tiefer als die Abflussstelle für die Kühlölzufuhr in die Doppelkupplung über eine Ölleitung 310. Da über den Druckölkreis, insbesondere die Druckölpumpe 208, regelmäßig keine wesentlichen Ölmengen aus dem Reservoir 252 abfließen können und auch für eine unterbrechungsfreie Ölversorgung der Druckölpumpe 208 zu sorgen ist, ist die Abflussstelle in die zur Druckölpumpe 208 führende Leitung 312 ebenfalls im Bodenbereich des Reservoirs 252 vorgesehen. Auf die Anordnung der der Ölzufuhrleitung 316 von der Pumpe 209 in das Reservoir 252 (der Ölfilter 250 ist in Fig. 3 nicht gezeigt) kommt es in diesem Zusammenhang nicht an.

Zu den Ausführungsbeispielen der Fig. 2 bis 4 sollte noch darauf hingewiesen werden, dass durchaus nur eine einzige Pumpe, nämlich die Pumpe 209, vorgesehen sein könnte, die dann sowohl die Druckölpumpenfunktion als auch die Kühlölpumpenfunktion mit übernehmen würde und hierfür einerseits einen für die Kühlung der Doppelkupplung hinreichenden Ölvolumenstrom bereitstellen müsste und andererseits das Öl auf einem für die Kupplungsbetätigung vermittels der Steuer-/Regel-Ventile 214 und 216 und der hydraulischen Nehmerzylinder hinreichenden Druck bereitstellen müsste.

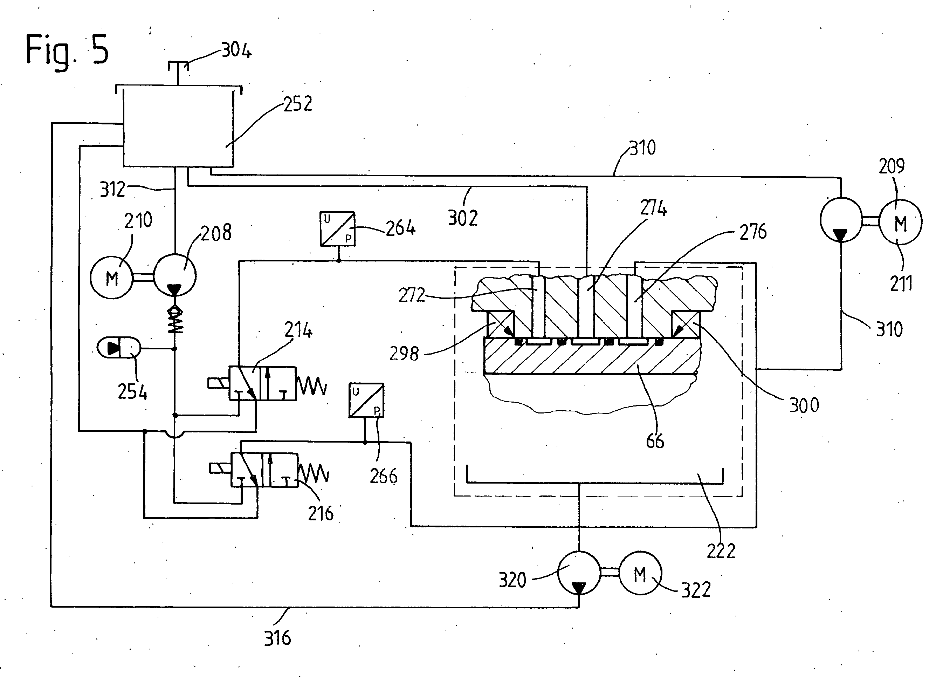

Fig. 5 zeigt ein weiteres Ausführungsbeispiel eines erfindungsgemäßen Kupplungssystems. Gleiche und analoge Komponenten dieses Systems sind in Fig. 5 mit den gleichen Bezugszeichen wie in Fig. 2 bezeichnet. Es werden hier nur die Unterschiede gegenüber dem System der Fig. 2 erläutert. Ein wesentlicher Unterschied gegenüber dem System der Fig. 2 liegt darin, dass eine gegenüber der Kühlölpumpe 209 und der Druckölpumpe 208 gesonderte Rückförderpumpe 320 für die Förderung des Öls aus dem Ölsumpf 222 in das Reservoir 252 vorgesehen ist, die vorzugsweise mittels eines Elektromotors 322 betreibbar ist. Es kommt grundsätzlich aber auch ein verbrennungsmotorischer Antrieb für die Rückförderpumpe 320 in Betracht. Die Kühlölpumpe 209 und die Druckölpumpe 210 sind beide ansaugseitig mit dem Reservoir 252 verbunden, das insoweit nicht unbedingt druckdicht ausgeführt sein muss, um eine ordnungsgemäße Ölversorgung betreffend die Kühlölzufuhr zur Doppelkupplung und die hydraulische Kupplungsbetätigung sicherzustellen. Die beiden Steuer-/Regel-Ventile 214 und 216 sind abflussseitig, also für den Ablass von Öl aus den dem jeweiligen hydraulischen Nehmerzylinder zugeordneten Hydrauliksystemabschnitt zum Ausrücken der betreffenden Kupplungsanordnung, mit dem Reservoir 252 verbunden, in dem hierfür - im Falle einer druckdichten Ausbildung - nur ein gegenüber den auftretenden Ölbetätigungsdrücken deutlich reduzierter Druck herrschen sollte. Der Rückfluss des Öls aus den hydraulischen Nehmerzylindern beim Auskuppeln unmittelbar in das Reservoir 252, also ohne Einschaltung der Rückförderpumpe 320, ist aus energetischen Gründen bevorzugt, da die Rückförderpumpe insoweit entlastet wird.

Erwähnt werden sollte noch, dass die Pumpen 209 und 208 gemäß Fig. 2 und die Pumpen 209, 208 und 320 gemäß Fig. 5 im Falle eines verbrennungsmotorischen Antriebs stetig mit einer Mindestmenge an Öl versorgt werden sollten, um ein Heißlaufen zu verhindern.

Ein Vorteil der Ausführungsform gemäß Fig. 5 gegenüber der Ausführungsform gemäß Fig. 2 ist, dass auf Grundlage der Konfiguration gemäß Fig. 5 für eine besonders hohe Versorgungssicherheit betreffend die Kühlölzufuhr auch bei nicht idealen Bauraumverhältnissen gesorgt werden kann, da im Falle der Fig. 5 auf jeden Fall das Reservoir 252 zum Ansaugen von Kühlöl durch die Pumpe 209 zur Verfügung steht. Im Falle von Fahrzeugen, die nicht über genügend Bauraum für einen ausreichend großen Ölsumpf 222 aufweisen, könnte es passieren, dass die Pumpe 209 der Fig. 2 unzureichend mit Öl versorgt wird, beispielsweise dann, wenn hohe Querbeschleunigungen mit entsprechenden Verschiebungen des Ölspiegels auftreten. Bei vielen Fahrzeugen wird man aber für eine hinreichende Größe des Ölsumpfs 222 sorgen können, so dass selbst unter Berücksichtigung von möglicherweise auftretenden extremen Querbeschleunigungen auf Grundlage der Konfiguration entsprechend Fig. 2 eine hinreichende Kühlölversorgungssicherheit gewährleistet werden kann. In diesem Fall ist die Ausführungsform gemäß Fig. 2 gegenüber der Ausführungsform gemäß Fig. 5 bevorzugt, da insgesamt nur zwei Pumpen, ggf. sogar nur eine Pumpe, benötigt werden.

## Patentansprüche

1. Kupplungssystem, umfassend eine Kupplungseinrichtung (202) für die Anordnung in einem Kraftfahrzeug-Antriebsstrang zur Momentenübertragung zwischen einer Antriebseinheit und einem Getriebe des Antriebsstrangs,
wobei die Kupplungseinrichtung wenigstens eine Kupplungsanordnung (204, 206) mit einer einer Abtriebswelle der Antriebseinheit zugeordneten Eingangsseite und einer einer Getriebeeingangswelle zugeordneten Ausgangsseite aufweist und vermittels wenigstens eines in die Kupplungseinrichtung (202) integrierten, sich im Betrieb mitdrehenden hydraulischen Nehmerzylinders (118 bzw. 140) betätigbar ist,
wobei das Kupplungssystem eine stationär angeordnete Steuer/Regel-Ventilanordnung (214, 216) umfasst, die einerseits an einer hydraulischen Druckmediumquelle (254) und andererseits über eine Drehdurchführungsanordnung (260) an dem hydraulischen Nehmerzylinder angeschlossen oder anschließbar ist,
**gekennzeichnet durch** ein Druckmediumreservoir (252), welches zumindest mit einem Nutz-Druckmediumaufnahmebereich oberhalb eines **durch** die Drehdurchführungsanordnung (260) definierten Höhenbereichs angeordnet ist und aus dem einem die Drehdurchführungsanordnungumfassenden,dieSteuer-/Regel-Ventilanordnung mit dem hydraulischen Nehmerzylinder verbindenden Hydrauliksystemabschnitt Druckmedium zuführbar ist, derart, dass
i) Druckmedium an wenigstens einer Leckagestelle (290, 296) auf der Abflussseite ansteht, um einem Abfluss von Druckmedium aus dem Hydrauliksystemabschnitt entgegenzuwirken oder/und
ii) Druckmedium über wenigstens eine Zuflussstelle (290, 296) in den Hydrauliksystemabschnitt nachfließt, um einen Abfluss von Druckmedium aus dem Hydrauliksystemabschnitt auszugleichen.

2. Kupplungssystem nach Anspruch 1, **dadurch gekennzeichnet, dass** über die Steuer-/Regel-Ventilanordnung (214, 216) einem die Drehdurchführungsanordnung (260) umfassenden, die Steuer-/Regel-Ventilanordnung mit dem hydraulischen Nehmerzylinder (118 bzw. 140) verbindenden Hydrauliksystemabschnitt Druckmedium.von der Druckmediumquelle (254) zuführbar und Druckmedium aus dem Hydrauliksystemabschnitt in Richtung zu einer an der Steuer-/Regel-Ventilanordnung angeschlossenen Druckmediumaufnahme (222; 252) abführbar ist, und
dass eine die Steuer-/Regel-Ventilanordnung umfassende Druckmediumverbindung zwischen der Drehdurchführungsanordnung (260) und der Druckmediumaufnahme (222; 252) wenigstens einen Abschnitt (214 bzw. 216) aufweist, der oberhalb eines durch die Drehdurchführungsanordnung (260) definierten Höhenbereichs angeordnet ist, oder/und
dass die Steuer-/Regel-Ventilanordnung in einem unbetätigten Ruhezustand in Richtung zur Druckmediumaufnahme im Wesentlichen abgeschlossen ist.

3. Kupplungssystem, umfassend eine Kupplungseinrichtung (202) für die Anordnung in einem Kraftfahrzeug-Antriebsstrang zur Momentenübertragung zwischen einer Antriebseinheit und einem Getriebe des Antriebsstrangs,
wobei die Kupplungseinrichtung wenigstens eine Kupplungsanordnung (204, 206) mit einer einer Abtriebswelle der Antriebseinheit zugeordneten Eingangsseite und einer einer Getriebeeingangswelle zugeordneten Ausgangsseite aufweist und vermittels wenigstens eines in die Kupplungseinrichtung integrierten, sich im Betrieb mitdrehenden hydraulischen Nehmerzylinders (118 bzw. 140) betätigbar ist,
wobei das Kupplungssystem eine stationär angeordnete Steuer/Regel-Ventilanordnung (214, 216) umfasst, die einerseits an einer hydraulischen Druckmediumquelle (254) und andererseits über eine Drehdurchführungsanordnung (260) an dem hydraulischen Nehmerzylinder angeschlossen oder anschließbar ist, wobei über die Steuer/Regel-Ventilanordnung (214, 216) einem die Drehdurchführungsanordnung (260) umfassenden, die Steuer-/Regel-Ventilanordnung mit dem hydraulischen Nehmerzylinder (118 bzw. 140) verbindenden Hydrauliksystemabschnitt Druckmedium von der Druckmediumquelle (254) zuführbar und Druckmedium aus dem Hydrauliksystemabschnitt in Richtung zu einer an der Steuer-/Regel-Ventilanordnung angeschlossenen Druckmediumaufnahme (222; 252) abführbar ist,
**dadurch gekennzeichnet,**
**dass** eine die Steuer-/Regel-Ventilanordnung umfassende Druckmediumverbindung zwischen der Drehdurchführungsanordnung (260) und der Druckmediumaufnahme (222; 252) wenigstens einen Abschnitt (214 bzw. 216) aufweist, der oberhalb eines durch die Drehdurchführungsanordnung (260) definierten Höhenbereichs angeordnet ist,
oder/und
**dass** die Steuer-/Regel-Ventilanordnung in einem unbetätigten Ruhezustand in Richtung zur Druckmediumaufnahme im Wesentlichen abgeschlossen ist.

4. Kupplungssystem nach Anspruch 2 oder 3, **dadurch gekennzeichnet, dass** die Steuer-/Regel-Ventilanordnung (214, 216) oberhalb des durch die Drehdurchführungsanordnung (260) definierten Höhenbereichs angeordnet ist.

5. Kupplungssystem nach einem der Ansprüche 1 bis 4, **dadurch gekennzeichnet, dass** die Drehdurchführungsanordnung (260) mit einer zwischen einem Drehdurchführungsstator (270) und einem Drehdurchführungsrotor (66) wirksamen Dichtungsanordnung (290, 292, 294, 296, 298, 300) ausgeführt ist, die wenigstens einen Druckmediumaufenthaltsbereich zwischen dem Drehdurchführungsstator und dem Drehdurchführungsrotor nach außen abdichtet.

6. Kupplungssystem nach Anspruch 5, **dadurch gekennzeichnet, dass** die Dichtungsanordnung eine erste Dichtungsstufe (290, 296) und eine der ersten Dichtungsstufe in Richtung nach außen nachgeschaltete zweite Dichtungsstufe (298, 300) aufweist, wobei die zweite Dichtungsstufe eine größere Dichtungswirkung als die erste Dichtungsstufe aufweist.

7. Kupplungssystem, umfassend eine Kupplungseinrichtung (202) für die Anordnung in einem Kraftfahrzeug-Antriebsstrang zur Momentenübertragung zwischen einer Antriebseinheit und einem Getriebe des Antriebsstrangs,
wobei die Kupplungseinrichtung wenigstens eine Kupplungsanordnung (204, 206) mit einer einer Abtriebswelle der Antriebseinheit zugeordneten Eingangsseite und einer einer Getriebeeingangswelle zugeordneten Ausgangsseite aufweist und vermittels wenigstens eines in die Kupplungseinrichtung integrierten, sich im Betrieb mitdrehenden hydraulischen Nehmerzylinders (118 bzw. 140) betätigbar ist,
wobei das Kupplungssystem eine stationär angeordnete Steuer/Regel-Ventilanordnung (214, 216) umfasst, die einerseits an einer hydraulischen Druckmediumquelle und andererseits über eine Drehdurchführungsanordnung (260) an dem hydraulischen Nehmerzylinder angeschlossen oder anschließbar ist, wobei die Drehdurchführungsanordnung mit einer zwischen einem Drehdurchführungsstator (270) und einem Drehdurchführungsrotor (66) wirksamen Dichtungsanordnung (290, 292, 294, 296, 298, 300) ausgeführt ist, die wenigstens einen Druckmediumaufenthaltsbereich zwischen dem Drehdurchführungsstator und dem Drehdurchführungsrotor nach außen abdichtet,
**dadurch gekennzeichnet,**
**dass** die Dichtungsanordnung eine erste Dichtungsstufe (290, 296) und eine der ersten Dichtungsstufe in Richtung nach außen nachgeschaltete zweite Dichtungsstufe (298, 300) aufweist, wobei die zweite Dichtungsstufe eine größere Dichtungswirkung als die erste Dichtungsstufe aufweist.

8. Kupplungssystem nach Anspruch 6 oder 7, **dadurch gekennzeichnet, dass** die erste Dichtungsstufe (290, 296) für einen an ihr anliegenden primären Druckmediumdruck als Drosselstufe wirkt, so dass an der zweiten Dichtungsstufe (298, 300) ein gegenüber dem primären Druckmediumdruck deutlich reduzierter sekundärer Druckmediumdruck anliegt.

9. Kupplungssystem nach einem der Ansprüche 6 bis 8, **dadurch gekennzeichnet, dass** die erste Dichtungsstufe wenigstens einen gewünschtenfalls geschlitzten Dichtungsring (290, 296) vorzugsweise auf Teflonbasis aufweist.

10. Kupplungssystem nach einem der Ansprüche 6 bis 9, **dadurch gekennzeichnet, dass** die zweite Dichtungsstufe wenigstens einen Radialwellendichtring (298, 300) aufweist.

11. Kupplungssystem nach einem der vorhergehenden Ansprüchen, **dadurch gekennzeichnet, dass** die Kupplungsanordnung als Lamellen-Kupplungsanordnung (204 bzw. 206) ausgeführt ist, der im Betrieb mittels einer zugeordneten, stationär angeordneten Betriebsmediumpumpenanordnung (209) über die Drehdurchführungsanordnung (260) ein Betriebsmedium, insbesondere ein Kühlöl, für einen Betrieb unter Einwirkung des Betriebsmediums zuführbar ist.

12. Kupplungssystem nach einem der vorhergehenden Ansprüchen, **dadurch gekennzeichnet, dass** die hydraulische Druckmediumquelle eine Druckmediumpumpenanordnung (208) und gewünschtenfalls einen Druckmediumspeicher (254) zur Speicherung unter Druck stehenden Druckmediums aufweist.

13. Kupplungssystem nach wenigstens einem der vorhergehende Ansprüche, jedenfalls nach Anspruch 1, **gekennzeichnet durch** eine Förderpumpenanordnung (209; 320) zur Förderung von Druckmedium aus einer unterhalb des Höhenbereichs angeordneten Druckmediumaufnahme, ggf. Ölsumpf (222), in das Druckmediumreservoir (252).

14. Kupplungssystem nach Anspruch 13 sowie nach Anspruch 11 oder/und 12, **dadurch gekennzeichnet, dass** die Förderpumpenanordnung (209) als Betriebsmediumpumpenanordnung (209) oder/und als Druckmediumpumpenanordnung dient (Fig. 2) und das Druckmediumreservoir Teil einer Betriebsmediumverbindung oder/und einer Druckmediumverbindung zwischen der Förderpumpenanordnung (209) und der Drehdurchführungsanordnung ist und dementsprechend dafür ausgelegt ist, wenigstens einem maximal auftretenden Betriebsmediumdruck bzw. wenigstens einem maximal auftretenden Druckmediumdruck standzuhalten.

15. Kupplungssystem nach wenigstens einem der vorhergehenden Ansprüche, jedenfalls nach Anspruch 1 oder Anspruch 14, **dadurch gekennzeichnet, dass** das Druckmediumreservoir (252) belüftbar ist.

16. Kupplungssystem nach Anspruch 15, **dadurch gekennzeichnet, dass** das Druckmediumreservoir (252) eine Belüftungsanordnung (304) aufweist, die in einem ersten Zustand das Druckmediumreservoir nach außen druckdicht abschließt und in einem zweiten Zustand eine Belüftungsverbindung nach außen öffnet, wobei die Belüftungsanordnung der zweite Zustand vorzugsweise einem unbetätigten Ruhezustand der Belüftungsanordnung entspricht.

17. Kupplungssystem nach wenigstens einem der vorhergehenden Ansprüche, jedenfalls nach Anspruch 1 und Anspruch 11, **dadurch gekennzeichnet, dass** die Betriebsmediumpumpenanordnung (209) mit ihrer Ansaugseite an dem Druckmediumreservoir (252) angeschlossen (Fig. 5) ist.

18. Kupplungssystem nach wenigstens einem der vorhergehenden Ansprüche, jedenfalls nach Anspruch 1 und Anspruch 12, **dadurch gekennzeichnet, dass** die Druckmediumpumpenanordnung (208) mit ihrer Ansaugseite an dem Druckmediumreservoir (252) angeschlossen ist.

19. Kupplungssystem nach wenigstens einem der vorhergehenden Ansprüche, jedenfalls nach Anspruch 1, **dadurch gekennzeichnet, dass** wenigstens eine Druckmediumabflussstelle des Druckmediumreservoirs (252), die mit der Leckagestelle (290, 296) bzw. der Zuflussstelle (290, 296) in Druckmediumzuführverbindung steht oder bringbar ist, die tiefste wesentliche Druckmediumabflussstelle des Druckmediumreservoirs ist.

20. Kupplungssystem nach wenigstens einem der vorhergehenden Ansprüche, jedenfalls nach Anspruch 1, **dadurch gekennzeichnet, dass** aus dem Druckmediumreservoir (252) der Drehdurchführungsanordnung (260) Druckmedium zuführbar ist, derart, dass i) Druckmedium an wenigstens einer Leckagestelle (290, 296) der Drehdurchführungsanordnung auf der Abflusseite ansteht oder/und ii) Druckmedium über wenigstens eine Zuflussstelle (290, 296) der Drehdurchführungsanordnung in den Hydrauliksystemabschnitt nachfließt.

21. Kupplungssystem nach Anspruch 20 und nach Anspruch 5, **dadurch gekennzeichnet, dass** Druckmediumreservoir (252) angeschlossen oder anschließbar ist an dem Druckmediumsaufenthaltsbereich, gegebenfalls an einem der ersten Dichtungsstufe (290, 296) zugeordneten inneren Druckmediumsaufenthaltsbereich (278, 280, 282).

22. Kupplungssystem nach Anspruch 21, **dadurch gekennzeichnet, dass** das Druckmediumreservoir angeschlossen oder anschließbar ist an einem Zwischen-Druckmediumsaufenthaltsbereich (280), der zwischen einem einem ersten hydraulischen Nehmerzylinder zugeordneten ersten inneren Druckmediumsaufenthaltsbereich (278) und einem einem zweiten hydraulischen Nehmerzylinder zugeordneten zweiten inneren Druckmediumsaufenthaltsbereich (282) angeordnet ist.

23. Kupplungssystem nach einem der vorhergehenden Ansprüche, **dadurch gekennzeichnet, dass** die Kupplungseinrichtung als Mehrfach-Kupplungseinrichtung, insbesondere Doppel-Kupplungseinrichtung (202) ausgeführt ist, die eine einer ersten Getriebeeingangswelle des Getriebes zugeordnete erste Kupplungsanordnung, insbesondere Lamellen-Kupplungseinrichtung (204), und eine einer zweiten Getriebeeingangswelle des Getriebes zugeordnete zweite Kupplungseinrichtung, insbesondere Lamellen-Kupplungsanordnung (206), aufweist, welche mittels eines/des ersten bzw. zweiten hydraulischen Nehmerzylinders (118 bzw. 140) unabhängig voneinander betätigbar sind.

24. Betätigungssystem, umfassend wenigstens einen drehbar angeordneten, in wenigstens einem Betriebszustand rotierenden hydraulischen Nehmerzylinder (118, 140), mit einer stationär angeordneten Steuer-/Regel-Ventilanordnung (214, 216), die einerseits an einer hydraulischen Druckmediumquelle (254) und andererseits über eine Drehdurchführungsanordnung (260) an dem hydraulischen Nehmerzylinder angeschlossen oder anschließbar ist,
**gekennzeichnet durch** ein Druckmediumreservoir (252), welches oberhalb eines **durch** die Drehdurchführungsanordnung (260) definierten Höhenbereichs angeordnet ist und aus dem einem die Drehdurchführungsanordnung umfassenden, die Steuer-/Regel-Ventilanordnung mit dem hydraulischen Nehmerzylinder verbindenden Hydrauliksystemabschnitt Druckmedium zuführbar ist, derart, dass
i) Druckmedium an wenigstens einer Leckagestelle (290, 296) auf der Abflussseite ansteht, um einem Abfluss von Druckmedium aus dem Hydrauliksystemabschnitt entgegenzuwirken oder/und
ii) Druckmedium über wenigstens eine Zuflussstelle (290, 296) in den Hydrauliksystemabschnitt nachfließt, um einen Abfluss von Druckmedium aus dem Hydrauliksystemabschnitt auszugleichen.

25. Betätigungssystem, gewünschtenfalls nach Anspruch 24, umfassend wenigstens einen drehbar angeordneten, in wenigstens einem Betriebszustand rotierenden hydraulischen Nehmerzylinder (118, 140), mit einer stationär angeordneten Steuer-/Regel-Ventilanordnung (214, 216), die einerseits an einer hydraulischen Druckmediumquelle (254) und andererseits über eine Drehdurchführungsanordnung (260) an dem hydraulischen Nehmerzylinder angeschlossen oder anschließbar ist, wobei über die Steuer-/Regel-Ventilanordnung einem die Drehdurchführungsanordnung (260) umfassenden, die Steuer-/Regel-Ventilanordnung mit dem hydraulischen Nehmerzylinder (118 bzw. 140) verbindenden Hydrauliksystemabschnitt Druckmedium von der Druckmediumquelle (254) zuführbar und Druckmedium aus dem Hydrauliksystemabschnitt in Richtung zu einer an der Steuer-/Regel-Ventilanordnung angeschlossenen Druckmediumaufnahme (222; 252) abführbar ist,
**dadurch gekennzeichnet,**
**dass** eine Druckmediumverbindung zwischen der Drehdurchführungsanordnung (260) und der Druckmediumaufnahme (222; 252) wenigstens einen Abschnitt (214 bzw. 216) aufweist, der oberhalb eines durch die Drehdurchführungsanordnung (260) definierten Höhenbereichs angeordnet ist,
oder/und
**dass** die Steuer-/Regel-Ventilanordnung in einem unbetätigten Ruhezustand in Richtung zur Druckmediumaufnahme im Wesentlichen abgeschlossen ist.

26. Betätigungssystem nach Anspruch 25, **dadurch gekennzeichnet, dass** die Steuer-/Regel-Ventilanordnung (214, 216) oberhalb des durch die Drehdurchführungsanordnung (260) definierten Höhenbereichs angeordnet ist.

27. Betätigungssystem, gewünschtenfalls nach einem der Ansprüche 24 bis 26, umfassend wenigstens einen drehbar angeordneten, in wenigstens einem Betriebszustand rotierenden hydraulischen Nehmerzylinder (118, 140), mit einer stationär angeordneten Steuer-/Regel-Ventilanordnung (214, 216), die einerseits an einer hydraulischen Druckmediumquelle (254) und andererseits über eine Drehdurchführungsanordnung (260) an dem hydraulischen Nehmerzylinder angeschlossen oder anschließbar ist, wobei die Drehdurchführungsanordnung mit einer zwischen einem Drehdurchführungsstator (270) und einem Drehdurchführungsrotor (66) wirksamen Dichtungsanordnung (290, 292, 294, 296, 298, 300) ausgeführt ist, die wenigstens einen Druckmediumaufenthaltsbereich zwischen dem Drehdurchführungsstator und dem Drehdurchführungsrotor nach außen abdichtet,
**dadurch gekennzeichnet,**
**dass** die Dichtungsanordnung eine erste Dichtungsstufe (290, 296) und eine der ersten Dichtungsstufe in Richtung nach außen nachgeschaltete zweite Dichtungsstufe (298, 300) aufweist, wobei die zweite Dichtungsstufe eine größere Dichtungswirkung als die erste Dichtungsstufe aufweist.

28. Betätigungssystem nach Anspruch 27, **dadurch gekennzeichnet, dass** die erste Dichtungsstufe (290, 296) für einen an ihr anliegenden primären Druckmediumdruck als Drosselstufe wirkt, so dass an der zweiten Dichtungsstufe (298, 300) ein gegenüber dem primären Druckmediumdruck deutlich reduzierter sekundärer Druckmediumdruck anliegt.

29. Betätigungssystem nach einem der Ansprüche 24 bis 28, **gekennzeichnet durch** die sich auf das Druckmediumreservoir (252) oder/und die Drehdurchführungsanordnung (260) bzw. deren Dichtungsanordnung (290, 292, 294, 296, 298, 300) direkt oder indirekt beziehenden Merkmale wenigstens eines der Ansprüche 1 bis 23.
